# EUROPEAN PATENT APPLICATION

(11) **EP 4 020 213 A1**
(43) Date of publication of application: **29.06.2022**
(21) Application number: 20863354.5
(22) Date of filing: 11.09.2020
(51) Int. Cl.: G06F 11/07

(54) **METHOD AND APPARATUS FOR PROCESSING ANOMALY IN VEHICLE-MOUNTED SYSTEM**

(30) Priority: 12.09.2019 CN 201910866626
(71) Applicant: Huawei Technologies Co., Ltd., Longgang District Shenzhen, Guangdong 518129 (CN)
(72) Inventor: QIN, Xian, Shenzhen, Guangdong 518129 (CN); WANG, Gailiang, Shenzhen, Guangdong 518129 (CN); YANG, Yuefeng, Shenzhen, Guangdong 518129 (CN); ZHANG, Yuhai, Shenzhen, Guangdong 518129 (CN)
(74) Representative: Pfenning, Meinig & Partner mbB
(86) International application number: PCT/CN2020/114868
(87) International publication number: WO 2021/047655

(57) **Abstract**

A method for handling an exception of an in-vehicle system is provided, including: An in-vehicle client obtains a program identifier of a first program, where the first program is a program that runs abnormally; and the in-vehicle client sends a handling request to a server, where the handling request is used to indicate the server to determine, based on a first mapping relationship, a first handling result corresponding to first exception identification information. The handling request carries the first exception identification information, and the first exception identification information includes the program identifier of the first program. The first mapping relationship records a correspondence between a plurality of pieces of exception identification information and a plurality of handling results, and each piece of exception identification information includes one program identifier. A handling result corresponding to the exception may be determined based on the program that runs abnormally in the in-vehicle system and that is determined by the in-vehicle client, to avoid repeated manual handling.

## Description

This application claims priority to Chinese Patent Application No. 201910866626.3, filed with the China National Intellectual Property Administration on September 12, 2019 and entitled "METHOD AND APPARATUS FOR HANDLING EXCEPTION OF IN-VEHICLE SYSTEM", which is incorporated herein by reference in its entirety.

### TECHNICAL FIELD

This application relates to the field of in-vehicle system technologies, and in particular, to a method and apparatus for handling an exception of an in-vehicle system.

### BACKGROUND

With continuous development of intelligent vehicle technologies, more vehicles are installed with in-vehicle systems including intelligent infotainment systems and the like. The in-vehicle system can implement many functions to meet people's requirements, and the system is complex. When an exception occurs in the in-vehicle system, a user needs to drive the vehicle to a repair shop. An engineer locally checks the vehicle to locate a problem, and determine a cause of the exception. This is time- and labor-consuming, and leads to poor user experience. When a problem occurs, problem locating needs to be manually performed, and this leads to poor real-time performance and complicated operations. In addition, the same problem needs to be manually and repeatedly located, which wastes labor and material resources.

### SUMMARY

This application provides a method for handling an exception of an in-vehicle system, so that an exception handling suggestion or an exception cause can be provided based on a program identifier of a program that runs abnormally in the in-vehicle system. This avoids manual handling and reduces labor costs.

According to a first aspect, a method for handling an exception of an in-vehicle system is provided, where the method includes: An in-vehicle client obtains a program identifier of a first program, where the first program is a program that runs abnormally; and the in-vehicle client sends a handling request to a server, where the handling request is used to indicate the server to determine, based on a first mapping relationship, a first handling result corresponding to first exception identification information. The handling request carries the first exception identification information, and the first exception identification information includes the program identifier of the first program. The first mapping relationship records a correspondence between a plurality of pieces of exception identification information and a plurality of handling results, and each piece of exception identification information includes one program identifier.

When the exception occurs in the in-vehicle system, the server is requested to determine, based on the first exception identification information, the first handling result corresponding to the first exception identification information, where the first exception identification information includes the program identifier of the program that runs abnormally in the in-vehicle system. This avoids manual handling and reduces labor costs.

It should be understood that the in-vehicle client may generate the first exception identification information based on the program identifier of the first program, and send the handling request to the server, where the handling request carries the first exception identification information, and is used to indicate the server to determine the first handling result corresponding to the first exception identification information.

With reference to the first aspect, in some possible implementations, code of the first program includes the program identifier of the first program.

The program identifier of the first program is written into the code of the first program, to reduce difficulty in obtaining the program identifier of the first program by the in-vehicle client, and reduce system overheads.

With reference to the first aspect, in some possible implementations, that an in-vehicle client obtains a program identifier of a first program includes: The in-vehicle client obtains exception stack information, where the exception stack information includes the program identifier of the first program.

It is simple and easy to obtain the program identifier of the first program based on the exception stack information. This implementation reduces difficulty in obtaining the program identifier of the first program by the in-vehicle client, and reduces system overheads.

With reference to the first aspect, in some possible implementations, when the first program runs, the program identifier of the first program is written into first memory space that is allocated to the first program, the code of the first program includes the program identifier of the first program, and the exception stack information is determined based on the first memory space.

With reference to the first aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

The exception identification information includes at least one of the exception log information, the exception state information, and the resource occupation information, so that the handling result can be more accurate.

With reference to the first aspect, in some possible implementations, the method further includes: The in-vehicle client receives a handling response sent by the server, where the handling response includes the first handling result.

By receiving the first handling result, the in-vehicle client receives a feedback of the server on the handling result of the exception of the in-vehicle system.

With reference to the first aspect, in some possible implementations, the first exception handling result includes at least one of a first exception handling suggestion, a first exception cause, and impact information. The first exception cause is used to indicate a first faulty unit in the in-vehicle system, and the impact information is used to indicate an affected second program.

With reference to the first aspect, in some possible implementations, the first handling result includes a first exception cause, the first exception cause is used to indicate a first faulty unit in the in-vehicle system, and the method further includes: The in-vehicle client receives the handling response sent by the server, where the handling response includes impact information, the impact information is used to indicate a second program, the second program is a program that is indicated by a second mapping relationship and that is associated with the first faulty unit, and the second mapping relationship is used to indicate an association relationship between a plurality of faulty units and a plurality of programs.

When a unit is faulty, running of a plurality of programs may be affected. The programs affected by the faulty unit are fed back, so that a user can take measures in advance, and this can improve user experience.

With reference to the first aspect, in some possible implementations, the method further includes: The in-vehicle client determines that an exception condition is met, to determine that the exception occurs in the in-vehicle system. The exception condition includes: The in-vehicle client receives indication information, where the indication information is used to indicate the in-vehicle client to obtain the program identifier of the first program; and/or it is detected that the in-vehicle system is in at least one of the following exception states: the memory overflow of the in-vehicle system, the memory address error of the in-vehicle system, and the program exception of the in-vehicle system.

System information is collected in a timely manner through active triggering by the user and exception monitoring, and this solves a problem that information is not collected in a timely manner when a problem occurs.

According to a second aspect, a method for handling an exception of an in-vehicle system is provided, where the method includes: A server receives a handling request sent by an in-vehicle client, where the handling request carries first exception identification information, the first exception identification information includes a program identifier of a first program, and the first program is a program that runs abnormally; and the server determines, based on a first mapping relationship, a first handling result corresponding to the first exception identification information, where the first handling result includes a first exception handling suggestion and/or a first exception cause. The first mapping relationship records a correspondence between a plurality of pieces of exception identification information and a plurality of handling results, each piece of exception identification information includes one program identifier, and each handling result includes an exception handling suggestion and/or an exception cause.

When the exception occurs in the in-vehicle system, the server determines, based on the first exception identification information, the first handling result corresponding to the first exception identification information, where the first exception identification information includes the program identifier of the program that runs abnormally, and the first handling result includes the first exception handling suggestion and/or the first exception cause. This avoids manual handling and reduces labor costs.

With reference to the second aspect, in some possible implementations, code of the first program includes the program identifier of the first program.

The program identifier of the first program is written into the code of the first program, to reduce difficulty in obtaining the program identifier of the first program by the in-vehicle client, and reduce system overheads.

With reference to the second aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

The exception identification information includes at least one of the exception log information, the exception state information, and the resource occupation information, so that the handling result can be more accurate.

With reference to the second aspect, in some possible implementations, the method further includes: The server sends a handling response to the in-vehicle client or user equipment corresponding to the in-vehicle client, where the handling response includes the first handling result.

The server sends the first handling result, to feed back the handling result of the exception of the in-vehicle system.

With reference to the second aspect, in some possible implementations, the first exception handling result includes at least one of the first exception handling suggestion, the first exception cause, and impact information. The first exception cause is used to indicate a first faulty unit in the in-vehicle system, and the impact information is used to indicate an affected second program.

With reference to the second aspect, in some possible implementations, the first handling result includes the first exception cause, and the first exception cause is used to indicate a first faulty unit in the in-vehicle system. The method further includes: The server determines, based on a second mapping relationship, a second program associated with the first faulty unit, where the second mapping relationship is used to indicate an association relationship between a plurality of faulty units and a plurality of programs.

When a unit is faulty, running of a plurality of programs may be affected. The programs affected by the faulty unit are fed back, so that a user can take measures in advance, and this can improve user experience.

With reference to the second aspect, in some possible implementations, the method further includes: The server sends a handling response to the in-vehicle client or the user equipment corresponding to the in-vehicle client, where the handling response includes the impact information, and the impact information is used to indicate the second program.

When a unit is faulty, running of a plurality of programs may be affected. The programs affected by the faulty unit are fed back, so that a user can take measures in advance, and this can improve user experience.

With reference to the second aspect, in some possible implementations, the method further includes: The server sends indication information to the in-vehicle client, where the indication information is used to indicate the in-vehicle client to send the handling request to the server.

System information is collected in a timely manner through active triggering by the user and exception monitoring, and this solves a problem that information is not collected in a timely manner when the problem occurs.

According to a third aspect, an apparatus for handling an exception of an in-vehicle system is provided, including: an obtaining module, configured to obtain a program identifier of a first program, where the first program is a program that runs abnormally; and a transceiver module, configured to send a handling request to a server, where the handling request is used to indicate the server to determine, based on a first mapping relationship, a first handling result corresponding to first exception identification information. The first handling result includes a first exception handling suggestion and/or a first exception cause, the handling request carries the first exception identification information, and the first exception identification information includes the program identifier of the first program. The first mapping relationship records a correspondence between a plurality of pieces of exception identification information and a plurality of handling results, each piece of exception identification information includes one program identifier, and each handling result includes an exception handling suggestion and/or an exception cause.

With reference to the third aspect, in some possible implementations, code of the first program includes the program identifier of the first program.

With reference to the third aspect, in some possible implementations, the obtaining module is configured to obtain exception stack information, where the exception stack information includes the program identifier of the first program.

With reference to the third aspect, in some possible implementations, when the first program runs, the program identifier of the first program is written into first memory space that is allocated to the first program, the code of the first program includes the program identifier of the first program, and the exception stack information is determined based on the first memory space.

With reference to the third aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

With reference to the third aspect, in some possible implementations, the transceiver module is further configured to receive a handling response sent by the server, where the handling response includes the first handling result.

With reference to the third aspect, in some possible implementations, the first exception handling result includes at least one of the first exception handling suggestion, the first exception cause, and impact information. The first exception cause is used to indicate a first faulty unit in the in-vehicle system, and the impact information is used to indicate an affected second program.

With reference to the third aspect, in some possible implementations, the first handling result includes the first exception cause, and the first exception cause is used to indicate a first faulty unit in the in-vehicle system. The transceiver module is further configured to receive the handling response sent by the server, where the handling response includes impact information, and the impact information is used to indicate a second program. The second program is a program that is indicated by a second mapping relationship and that is associated with the first faulty unit, and the second mapping relationship is used to indicate an association relationship between a plurality of faulty units and a plurality of programs.

With reference to the third aspect, in some possible implementations, the apparatus further includes a determining module, configured to determine that an exception condition is met, so as to determine that the exception occurs in the in-vehicle system. The exception condition includes: The in-vehicle client receives indication information, where the indication information is used to indicate the in-vehicle client to obtain the program identifier of the first program; and/or it is detected that the in-vehicle system is in at least one of the following exception states: the memory overflow of the in-vehicle system, the memory address error of the in-vehicle system, and the program exception of the in-vehicle system.

According to a fourth aspect, an apparatus for handling an exception of an in-vehicle system is provided, including: a transceiver module, configured to receive a handling request sent by an in-vehicle client, where the handling request carries first exception identification information, the first exception identification information includes a program identifier of a first program, and the first program is a program that runs abnormally; and a determining module, configured to determine, based on a first mapping relationship, a first handling result corresponding to the first exception identification information, where the first handling result includes a first exception handling suggestion and/or a first exception cause. The first mapping relationship records a correspondence between a plurality of pieces of exception identification information and a plurality of handling results, each piece of exception identification information includes one program identifier, and each handling result includes an exception handling suggestion and/or an exception cause.

With reference to the fourth aspect, in some possible implementations, code of the first program includes the program identifier of the first program.

With reference to the fourth aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

With reference to the fourth aspect, in some possible implementations, the transceiver module is further configured to send a handling response to the in-vehicle client or user equipment corresponding to the in-vehicle client, where the handling response includes the first handling result.

With reference to the fourth aspect, in some possible implementations, the first exception handling result includes at least one of the first exception handling suggestion, the first exception cause, and impact information. The first exception cause is used to indicate a first faulty unit in the in-vehicle system, and the impact information is used to indicate an affected second program.

With reference to the fourth aspect, in some possible implementations, the first handling result includes the first exception cause, and the first exception cause is used to indicate a first faulty unit in the in-vehicle system. The determining module is further configured to determine, based on a second mapping relationship, a second program associated with the first faulty unit. The second mapping relationship is used to indicate an association relationship between a plurality of faulty units and a plurality of programs.

With reference to the fourth aspect, in some possible implementations, the transceiver module is further configured to send a handling response to the in-vehicle client or the user equipment corresponding to the in-vehicle client, where the handling response includes the impact information, and the impact information is used to indicate the second program.

With reference to the fourth aspect, in some possible implementations, the transceiver module is further configured to send indication information to the in-vehicle client, where the indication information is used to indicate the in-vehicle client to send the handling request to the server.

According to a fifth aspect, an apparatus for handling an exception of an in-vehicle system is provided, and includes: a processor and a communications interface. The processor is configured to obtain a program identifier of a first program, where the first program is a program that runs abnormally. The communications interface is configured to send a handling request to a server, where the handling request is used to indicate the server to determine, based on a first mapping relationship, a first handling result corresponding to first exception identification information. The first handling result includes a first exception handling suggestion and/or a first exception cause, and the handling request carries the first exception identification information. The first exception identification information includes the program identifier of the first program. The first mapping relationship records a correspondence between a plurality of pieces of exception identification information and a plurality of handling results, each piece of exception identification information includes one program identifier, and each handling result includes an exception handling suggestion and/or an exception cause.

With reference to the fifth aspect, in some possible implementations, code of the first program includes the program identifier of the first program.

With reference to the fifth aspect, in some possible implementations, the processor is configured to obtain exception stack information, where the exception stack information includes the program identifier of the first program.

With reference to the fifth aspect, in some possible implementations, when the first program runs, the program identifier of the first program is written into first memory space that is allocated to the first program, the code of the first program includes the program identifier of the first program, and the exception stack information is determined based on the first memory space.

With reference to the fifth aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

With reference to the fifth aspect, in some possible implementations, the communications interface is further configured to receive a handling response sent by the server, where the handling response includes the first handling result.

With reference to the fifth aspect, in some possible implementations, the first exception handling result includes at least one of the first exception handling suggestion, the first exception cause, and impact information. The first exception cause is used to indicate a first faulty unit in the in-vehicle system, and the impact information is used to indicate an affected second program.

With reference to the fifth aspect, in some possible implementations, the first handling result includes the first exception cause, and the first exception cause is used to indicate a first faulty unit in the in-vehicle system. The communications interface is further configured to receive the handling response sent by the server, where the handling response includes impact information, and the impact information is used to indicate a second program. The second program is a program that is indicated by a second mapping relationship and that is associated with the first faulty unit, and the second mapping relationship is used to indicate an association relationship between a plurality of faulty units and a plurality of programs.

With reference to the fifth aspect, in some possible implementations, the processor is further configured to determine that an exception condition is met, so as to determine that the exception occurs in the in-vehicle system. The exception condition includes: The in-vehicle client receives indication information, where the indication information is used to indicate the in-vehicle client to obtain the program identifier of the first program; and/or it is detected that the in-vehicle system is in at least one of the following exception states: the memory overflow of the in-vehicle system, the memory address error of the in-vehicle system, and the program exception of the in-vehicle system.

According to a sixth aspect, an apparatus for handling an exception of an in-vehicle system is provided, and includes a processor and a communications interface. The communications interface is configured to receive a handling request sent by an in-vehicle client, where the handling request carries first exception identification information, the first exception identification information includes a program identifier of a first program, and the first program is a program that runs abnormally. The processor is configured to determine, based on a first mapping relationship, a first handling result corresponding to the first exception identification information, where the first handling result includes a first exception handling suggestion and/or a first exception cause. The first mapping relationship records a correspondence between a plurality of pieces of exception identification information and a plurality of handling results, each piece of exception identification information includes one program identifier, and each handling result includes an exception handling suggestion and/or an exception cause.

With reference to the sixth aspect, in some possible implementations, code of the first program includes the program identifier of the first program.

With reference to the sixth aspect, in some possible implementations, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

With reference to the sixth aspect, in some possible implementations, the communications interface is further configured to send a handling response to the in-vehicle client or user equipment corresponding to the in-vehicle client, where the handling response includes the first handling result.

With reference to the sixth aspect, in some possible implementations, the first exception handling result includes at least one of the first exception handling suggestion, the first exception cause, and impact information. The first exception cause is used to indicate a first faulty unit in the in-vehicle system, and the impact information is used to indicate an affected second program.

With reference to the sixth aspect, in some possible implementations, the first handling result includes the first exception cause, and the first exception cause is used to indicate a first faulty unit in the in-vehicle system. The processor is further configured to determine, based on a second mapping relationship, a second program associated with the first faulty unit. The second mapping relationship is used to indicate an association relationship between a plurality of faulty units and a plurality of programs.

With reference to the sixth aspect, in some possible implementations, the communications interface is further configured to send a handling response to the in-vehicle client or the user equipment corresponding to the in-vehicle client, where the handling response includes the impact information, and the impact information is used to indicate the second program.

With reference to the sixth aspect, in some possible implementations, the communications interface is further configured to send indication information to the in-vehicle client, where the indication information is used to indicate the in-vehicle client to send the handling request to the server.

According to a seventh aspect, a system for handling an exception of an in-vehicle system is provided, and includes the in-vehicle client and the server described above.

According to an eighth aspect, a computer storage medium is provided. When computer instructions are run on an electronic device, the electronic device is enabled to perform the method according to the first aspect.

According to a ninth aspect, a computer storage medium is provided. When computer instructions are run on an electronic device, the electronic device is enabled to perform the method according to the second aspect.

According to a tenth aspect, a chip system is provided, where the chip system includes at least one processor, and when program instructions are executed in the at least one processor, the chip system is enabled to perform the method according to the first aspect.

According to an eleventh aspect, a chip system is provided, where the chip system includes at least one processor, and when program instructions are executed in the at least one processor, the chip system is enabled to perform the method according to the second aspect.

### BRIEF DESCRIPTION OF DRAWINGS

FIG. 1 is a schematic diagram of a format of stack information;
FIG. 2 is a schematic flowchart of a method for handling an exception of an in-vehicle system according to an embodiment of this application;
FIG. 3 is a schematic flowchart of another method for handling an exception of an in-vehicle system according to an embodiment of this application;
FIG. 4 is a schematic diagram of a structural relationship of an in-vehicle system;
FIG. 5 is a schematic diagram of a system for handling an exception of an in-vehicle system according to an embodiment of this application;
FIG. 6 is a schematic diagram of a structure of an apparatus for handling an exception of an in-vehicle system according to an embodiment of this application;
FIG. 7 is a schematic diagram of a structure of another apparatus for handling an exception of an in-vehicle system according to an embodiment of this application;
FIG. 8 is a schematic diagram of a structure of still another apparatus for handling an exception of an in-vehicle system according to an embodiment of this application; and
FIG. 9 is a schematic diagram of a structure of yet another apparatus for handling an exception of an in-vehicle system according to an embodiment of this application.

### DESCRIPTION OF EMBODIMENTS

The following describes technical solutions of this application with reference to the accompanying drawings.

It should be understood that, in embodiments of the present invention, various wireless communications solutions, for example, a global system for mobile communication (global system for mobile communication, GSM), a code division multiple access (code division multiple access, CDMA) system, a wideband code division multiple access (wideband code division multiple wireless, WCDMA) system, a general packet radio service (general packet radio service, GPRS) system, a long term evolution (long term evolution, LTE) system, and a wireless local area network (wireless local area network, WLAN), may be applied for communication.

With development of autonomous driving technologies, users pay more attention to in-vehicle systems. The in-vehicle system provides more and more services, and the system becomes more and more complex. In such a complex in-vehicle system, when an exception occurs in the in-vehicle system, how to quickly locate and resolve a problem becomes very important. When a fault occurs in an in-vehicle electronic system, a root cause of the fault cannot be determined automatically and effectively.

For a Linux in-vehicle system, an exception state may be stored by using a core dump (core dump) technology of Linux. When detecting that a program of the in-vehicle system runs abnormally, the in-vehicle system outputs stack information. The in-vehicle system captures, by using a core dump service, the stack information when the program exits abnormally. The stack information stores a memory address of the program that runs abnormally. The in-vehicle system can capture, by using a log management service, a log generated by the running program. The stack information completes connection, authentication, and communication with a network server by using the Hypertext Transfer Protocol (Hypertext Transfer Protocol, HTTP), to implement remote connection and automatic upload of an exception log, and immediately report the exception state.

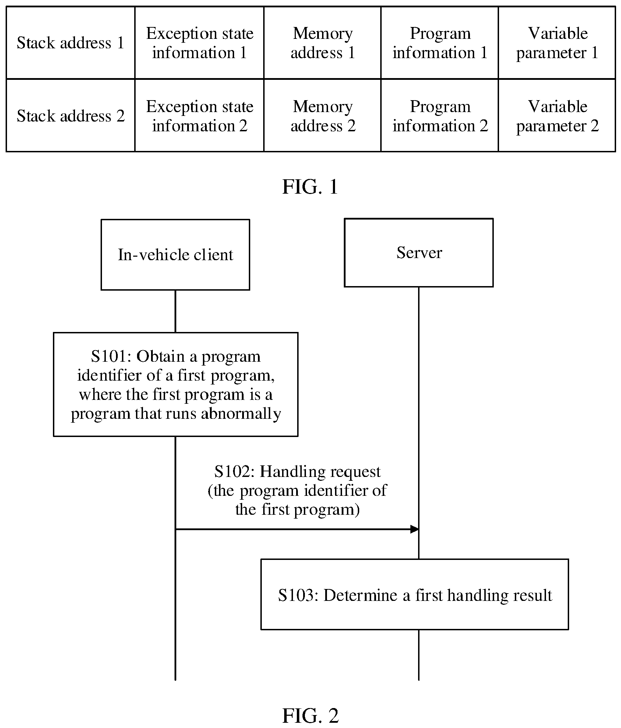

When the program exits abnormally, the in-vehicle system outputs the stack information, and the stack information is stored in a stack. FIG. 1 is a schematic diagram of a format of stack information. In each stack address, stored information includes exception state information, a memory address of a program that exits abnormally, program information, variable parameters, and the like. It should be understood that the format of the stack information shown in FIG. 1 is merely an example, and each stack address may include more or less information.

The exception state information is used to indicate an exception state of an in-vehicle system. For example, the exception state includes a memory overflow, a memory address error, a program exception of the in-vehicle system, and the like.

The variable parameters are related parameters of the program during running, such as input information of the program.

For example, the program information may be a name, a function, or the like of the program. Because the program information is not uniformly defined, a program that runs abnormally cannot be accurately determined based on the program information.

The program runs in the in-vehicle system, and memory space allocated by the in-vehicle system to a same program is different each time. Therefore, maintenance personnel need to view memory based on the memory address of the program, to determine the program that is running when a fault occurs, so as to determine the function of the program. The maintenance personnel can determine a fault cause based on log information, to provide a solution.

In addition, the foregoing method does not provide an active collection function. If a monitoring service is abnormal, log collection cannot be performed.

In another method for handling an exception of an in-vehicle system, whether the exception occurs in the in-vehicle system is learned by using a watchdog technology and a state verification technology. Exception information includes crash, restart, and no response to operations. When the exception information is collected, a log of the in-vehicle system is recorded, and the exception information and recorded log information are sent to a mailbox specified by a user.

Maintenance personnel of the log information determine, based on the log information, a program that is running when a fault occurs and that corresponds to the log, to determine a function of the program, and the like. The maintenance personnel can determine a fault cause based on the log information, to provide a solution.

Because the in-vehicle system is complex, the collected information still needs to be manually processed to locate a problem, determine an exception cause of the in-vehicle system, and provide a solution. Handling of the exception of the in-vehicle system is manually performed and inefficient.

To resolve the foregoing problem, the embodiments of this application provide a method for handling an exception of an in-vehicle system.

FIG. 2 is a schematic flowchart of the method for handling an exception of an in-vehicle system according to an embodiment of this application. For example, the in-vehicle system may be an in-vehicle infotainment (in-vehicle infotainment, IVI) system.

Step S101: An in-vehicle client obtains a program identifier of a first program. The first program is a program that runs abnormally in the in-vehicle system.

The in-vehicle system monitors a running process. When detecting an exception state, the in-vehicle system stores, in a stack, information about the program that runs abnormally. For example, the exception state may include at least one of the following states: a memory overflow of the in-vehicle system, a memory address error of the in-vehicle system, a program exception of the in-vehicle system, and the like.

The memory overflow indicates that memory is insufficient. A memory size cannot meet a memory requirement for program running.

The memory address error may also be referred to as a segmentation fault. Memory accessed by the program exceeds memory space allocated by the in-vehicle system to the program. For example, the program accesses a nonexistent memory address, a memory address protected by the in-vehicle system, or a read-only memory address.

The program exception of the in-vehicle system may include at least one of the following states: a program deadlock of the in-vehicle system, exit of the program of the in-vehicle system due to the exception, and the like. The program deadlock refers to a blocking phenomenon caused by two or more processes competing for resources or communicating with each other during execution. If no external force is acted, the two or more processes cannot continue.

When the program exception of the in-vehicle system occurs, the first program may be the program that runs abnormally.

Alternatively, when finding that the exception occurs during running of the in-vehicle system, a user may indicate the in-vehicle client to collect information related to the running program. The in-vehicle system obtains indication information. The indication information is used to indicate the in-vehicle system to store, in the stack, information related to the program that runs abnormally, namely, the first program. The information related to the first program is stored in the stack. That is, the information related to the first program is output from the stack. The user may enter the indication information into the in-vehicle client or the in-vehicle system, the user may send the indication information to the in-vehicle system through another user equipment, or the user may send request information to the in-vehicle server through user equipment. The request information is used to request the in-vehicle server to send the indication information to the in-vehicle client device or the in-vehicle system. The in-vehicle client can send the indication information to the in-vehicle system. In some embodiments, the in-vehicle system may be a part of the in-vehicle client, or the in-vehicle client may be a part of the in-vehicle system.

In some cases, when the user perceives that the exception occurs in the in-vehicle system, but the in-vehicle client does not obtain, in a timely manner, the program identifier of the program that runs abnormally, the user may indicate the in-vehicle client to obtain the program identifier of the program that runs abnormally, so as to handle the exception of the in-vehicle system in a timely manner.

That is, the in-vehicle client determines that an exception condition is met, to determine that the exception occurs in the in-vehicle system. The exception condition includes: The in-vehicle client receives the indication information, where the indication information is used to indicate the in-vehicle client to obtain the program identifier of the first program; and/or it is detected that the in-vehicle system is in at least one of the following exception states: a memory overflow of the in-vehicle system, a memory address error of the in-vehicle system, and a program exception of the in-vehicle system. The indication information may be further used to indicate the in-vehicle client to send a handling request to the server. The program exception of the in-vehicle system may be the memory overflow of the in-vehicle system and/or the memory address error of the in-vehicle system. When the in-vehicle system is in at least one of the exception states, the in-vehicle system determines the first program in which the exception occurs, and outputs stack information. The in-vehicle client may detect the in-vehicle system to determine that the exception condition is met, or may detect the stack information output by the in-vehicle system, to determine that the program exception of the in-vehicle system occurs, so as to determine that the exception condition is met. That the in-vehicle client detects the stack information that is output by the in-vehicle system may also be understood as detecting the program exception of the in-vehicle system.

The in-vehicle client can collect information about the program exception of the in-vehicle system in a timely manner through active triggering by the user and exception monitoring. In this way, the exception can be handled as soon as possible, and this improves user experience.

The information collected by the in-vehicle client may include the program identifier of the first program. The information collected by the in-vehicle client may further include one or more of exception log information, exception state information, resource occupation information, and the like.

When the exception occurs in the in-vehicle system, the in-vehicle system outputs exception stack information, and the exception stack information is stored in the stack. When the exception occurs in the in-vehicle system, the in-vehicle system writes information related to the exception into the stack. The exception stack information may include all or a part of the information stored in the stack. For the information stored in the stack, refer to FIG. 1.

When the in-vehicle system runs, an invoked program is stored in the memory. That is, when the first program runs, the program of the first program is written into first memory space that is allocated to the first program.

During code development of a program, a program identifier may be written into the program. Program identifiers are used to identify different programs.

Rules for printing the stack information by the in-vehicle system may be defined. That is, a format of the information stored in the stack is defined. A format of the exception stack information may also be defined. The first program is the program that runs abnormally. The stack information output by the in-vehicle system may include the program identifier of the first program. Refer to the stack information output by the in-vehicle system shown in FIG. 2. Program information may include the program identifier of the program that runs abnormally. Alternatively, a new field may be added to the stack information, and the program identifier of the program that runs abnormally is used as information of the field. Therefore, exception stack information corresponding to the first program may include the program identifier of the first program. The stack information that corresponds to the first program and that is output by the in-vehicle system may include an address of the first program in the memory. When detecting an exception state, the stack information that corresponds to the first program and that is output by the in-vehicle system may include the exception state information, and the exception state information is used to indicate the exception state that occurs. The in-vehicle client may obtain the exception stack information, to obtain the program identifier of the first program.

The in-vehicle client may determine a log corresponding to the program that runs abnormally, namely, a log corresponding to the first program. The log is a running trace of the in-vehicle system. The exception log information may be obtained based on information that is recorded in the log corresponding to the program that runs abnormally. The exception log information may include all or a part of the information that is recorded in the log corresponding to the program that runs abnormally. For example, the exception log information may be obtained by performing information anonymization on the information that is recorded in the log corresponding to the program that runs abnormally. The information anonymization means performing anonymization on the collected information, to protect user privacy.

A format of the log can be defined. When code of the program includes the program identifier, the log corresponding to the program may include the program identifier of the program. That is, the exception log information corresponding to the first program may include the program identifier of the first program. The in-vehicle client may obtain the exception log information, to obtain the program identifier of the first program.

Alternatively, the in-vehicle client may determine an address of the first program in an external memory, and the address of the first program in the external memory may also be referred to as a storage address of the first program. For example, the first program is determined based on the address of the first program in the memory in the exception stack information. The in-vehicle client may traverse the external memory, to determine the storage address of the first program, namely, the address of the first program in the external memory. The in-vehicle client may use the storage address of the first program as the program identifier of the first program.

When the exception is manually handled, an exception cause may be manually determined based on the log of the in-vehicle system and the corresponding program, and then an exception handling suggestion is provided.

For a same program, causes of a same exception state may be the same. Therefore, after the exception is manually handled, a one-to-one correspondence between an exception state identifier and a handling result may be determined. Certainly, for the same program, causes of the exception state may be different. For the same program, an exception state identifier may correspond to a plurality of handling results.

Exception identification information may be determined based on the program identifier, or the exception identification information may be determined based on the program identifier and at least one of the exception log information, the exception status information, and the resource occupation information. First exception identification information may include a program identifier of the first program. The program identifier of the first program in the first exception identification information may be the same as or different from the program identifier of the first program in the exception log information or the exception stack information. The program identifier of the first program in the first exception identification information may be obtained by performing mapping such as compression mapping on the program identifier of the first program in the exception log information or the exception stack information.

The resource occupation information may also be referred to as operating system information, and may include one or more of hard disk occupation information, handle information, memory occupation information, central processing unit (central processing unit, CPU) occupation information, and the like. The hard disk occupation information may be used to indicate a hard disk occupation status of the in-vehicle system. The handle information may be used to indicate a quantity of occupied handles in the in-vehicle system. For example, the handle is used to identify an opened file in the in-vehicle system, and the in-vehicle system may allocate one handle to each opened file. The memory occupation information is used to indicate an overall memory occupation status of the in-vehicle system. The CPU occupation information is used to indicate a CPU occupation status of the in-vehicle system. The in-vehicle client may send a request message to the in-vehicle system, where the request message is used to indicate the in-vehicle system to send the resource occupation information to the in-vehicle client. The in-vehicle system may send the resource occupation information to the in-vehicle client after receiving the request message sent by the in-vehicle client. The in-vehicle client may send the request message to the in-vehicle system when determining that the exception condition is met, that is, when determining that the exception occurs in the in-vehicle system. The in-vehicle client may obtain the resource occupation information sent by the in-vehicle system.

The exception identification information includes the resource occupation information, and the server may determine, based on the resource occupation status of the in-vehicle system, whether the exception of the in-vehicle system is caused by insufficient resources of the in-vehicle system. Further, the server may determine a resource or resources that cause the exception of the in-vehicle system due to insufficiency.

Alternatively, the exception identification information may be determined only based on the program identifier. In this case, one or more handling results may be determined based on the exception identification information. The one or more handling results may be handling results corresponding to a plurality of types of exception log information, or the one or more handling results are one or more handling results that cause the exception of the in-vehicle system in a running process of the program corresponding to the program identifier. The exception identification information may include the program identifier. It may be understood that the exception identification information includes all information about the program identifier, or the exception identification information includes a result of performing compression mapping on the program identifier.

The exception identification information includes the program identifier of the first program. The exception identification information may further include at least one of the exception status information, the exception log information, and the resource occupation information. The corresponding program may be determined based on the exception identification information. In a possible manner, at least one of the corresponding exception state information, exception log information, and resource occupation information may be further determined based on the exception identification information.

The in-vehicle client obtains the program identifier of the first program. The in-vehicle client may obtain the exception stack information and/or the program identifier of the first program that is included in the log corresponding to the first program, or the in-vehicle client may determine the storage address of the first program based on the exception stack information. The in-vehicle client obtains the storage address to obtain the program identifier of the first program.

Step S102: The in-vehicle client sends the handling request to the server. The handling request carries the first exception identification information, and the first exception identification information includes the program identifier of the first program. That is, the handling request includes the program identifier of the first program.

The first exception identification information may further include the exception log information and/or the exception state information. The exception state information is used to indicate at least one of the following exception states: the memory overflow of the in-vehicle system, the memory address error of the in-vehicle system, and the program exception of the in-vehicle system.

The handling request is used to indicate the server to determine a first handling result corresponding to the first exception identification information.

Step S 103: The server determines the first handling result and/or impact information. The first handling result may include at least one of an exception handling suggestion, an exception cause, and the impact information. The impact information is used to indicate a second program that is affected when the exception occurs in the in-vehicle system. The second program may be a program associated with a first faulty unit that causes the exception of the in-vehicle system.

The server may determine, based on a first mapping relationship, the first handling result corresponding to the first exception identification information.

When the exception identification information does not include the resource occupation information, if the handling request carries the resource occupation information, the server may determine, based on the resource occupation information, namely, the resource occupation status of the in-vehicle system, whether the exception of the in-vehicle system is caused by the insufficient resources of the in-vehicle system, and specifically determine a resource or resources that cause the exception of the in-vehicle system due to insufficiency. When determining that the exception is not caused by the insufficient resources, the server may determine, based on the first mapping relationship, the first handling result corresponding to the first exception identification information.

When determining that the exception of the in-vehicle system is not caused by the insufficient resources of the in-vehicle system, the server may determine the first handling result based on the first mapping relationship.

The first mapping relationship records a correspondence between a plurality of pieces of exception identification information and a plurality of handling results, and each piece of exception identification information includes one program identifier. The exception identification information may further include the exception log information and/or the exception state information.

Each handling result may include one or more handling suggestions, and/or one or more exception causes, and one or more affected programs.

The server may determine one or more handling results based on the program identifier of the first program. The first handling result includes the one or more handling results. When there are a plurality of handling results corresponding to the program identifier of the first program, the server may further determine the one or more handling results from the plurality of handling results based on the exception log information and/or the exception state information in the first exception identification information.

The first handling result may include a first exception cause. The first exception cause is used to indicate the first faulty unit in the in-vehicle system. That is, the exception of the in-vehicle system is caused by a fault of the first faulty unit.

The server may determine, based on a second mapping relationship, the second program associated with the first faulty unit. The second mapping relationship is used to indicate an association relationship between a plurality of faulty units and a plurality of programs.

The fault of the first faulty unit may affect the program associated with the first faulty unit. The server determines the second program associated with the first faulty unit, and the second program is a program that may be affected by the fault of the first faulty unit. That is, the second program is a program corresponding to the first exception identification information. When the exception occurs in the in-vehicle system corresponding to the first exception identification information, the second program is affected.

Alternatively, the server may determine, based on the association relationship between the plurality of pieces of exception identification information and the plurality of programs, the second program corresponding to the first exception identification information.

The handling request may include the exception log information, and the first exception identification information may include the exception log information, or the exception log information may be located in another field other than the exception log information in the handling request.

When the handling result corresponding to the first exception identification information does not exist in the first mapping relationship, the first handling result may be manually determined. The first handling result may be manually determined based on the exception log information and the program identifier of the first program. Then, the first mapping relationship is updated, and a correspondence between the first exception identification information and the first handling result is added to the first mapping relationship.

Alternatively, the server may determine the second program based on a third mapping relationship. The third mapping relationship records a correspondence between the plurality of pieces of exception identification information and the plurality of programs.

After step S103, the server sends a handling response. The handling response may include the first handling result and/or the impact information.

The server may send the handling response to the in-vehicle client, or the server may send the handling response to user equipment corresponding to the in-vehicle client. The user equipment corresponding to the in-vehicle client may register with the server in advance. That is, the server stores a correspondence between the in-vehicle client and the user equipment.

The server and the in-vehicle client may be independent devices, or may be integrated in a same device to implement different functions. Information transmission between the server and the in-vehicle client may be performed in a wired or wireless manner.

According to steps S101 to S103, when the exception occurs in the in-vehicle system, the handling result can be automatically provided, to resolve a problem of the in-vehicle system. This resolves a problem that maintenance personnel need to locally locate the problem when the problem occurs, saves time, and improves user experience.

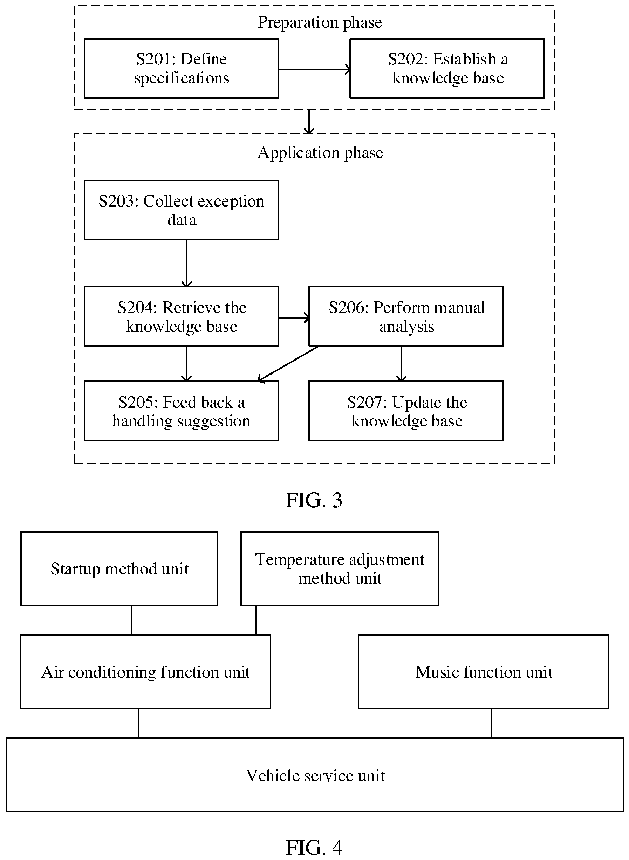

FIG. 3 is a schematic flowchart of a method for handling an exception of an in-vehicle system according to an embodiment of this application.

Step S201: Define specifications.

In a program development phase, a program identifier is defined. A stack information printing specification and a log printing specification are defined.

The program identifier is used to identify a program. Each program is used to perform a corresponding method. For example, the program identifier may include a service name, a function name, and a method name. A program identifier music::play::playNext may be used to indicate a program name for playing a next piece of music, where playNext is a method name, play is a function name, and music is a service name.

When detecting an exception state, the in-vehicle system may print stack information, that is, record exception-related information in a stack. In other words, when the exception occurs, the in-vehicle system may record the exception-related information in the stack according to monitoring. Alternatively, when receiving indication information, the in-vehicle system may record exception-related information in the stack. The indication information may be used to indicate that an exception state occurs, or the indication information may be used to indicate an in-vehicle client to obtain a program identifier of a first program, or the indication information may be used to indicate an in-vehicle client to send a handling request to a server.

The indication information may be entered by a user into the in-vehicle system, or may be sent by user equipment to the in-vehicle system, or may be sent by user equipment to the server and then sent by the server to a vehicle-mounted device.

For a format of the exception-related information that is recorded in the stack, refer to FIG. 1. Program information may include an exception program identifier. The in-vehicle client may extract exception stack information from the exception-related information that is recorded in the stack. The exception stack information may include exception state information, and the exception state information is used to indicate an exception state. The exception state information may also be referred to as an exception semaphore. For example, the exception state includes a memory overflow, a memory address error, a program exception of the in-vehicle system, and the like. The exceptions such as the memory overflow and the memory address error may be detected and determined by the in-vehicle system.

The exception stack information may include an exception program identifier, and the exception program identifier is a program identifier of a program that is running when the exception state occurs.

The exception stack information may further include a memory address of the program that is running when the exception state occurs.

A log may record a running track of the program. When the log is printed, a log prefix is added, so that a correspondence between log information and the program can be clearer. For example, the log prefix may include a service name and a function name. For example, the log prefix may include music::play::playNext.

Step S202: Establish a knowledge base.

The knowledge base may include two parts: One part is a structural relationship of the in-vehicle system, and the other part is an exception library.

FIG. 4 is a schematic diagram of the structural relationship of the in-vehicle system. Units in the in-vehicle system depend on each other. A bottom-layer unit supports a plurality of upper-layer units. It should be understood that the bottom-layer unit is a concept relative to the upper-layer unit. The bottom-layer unit may also be referred to as a lower-layer unit. In the in-vehicle system, units from bottom to top may be sequentially a service unit, a function unit, and a method unit. When a bottom-layer unit is faulty, an exception occurs in a method and/or a function provided by another upper-layer unit that depends on the bottom-layer unit. That is, an upper-layer unit of the bottom-layer unit is affected. For example, a vehicle service unit serves as a bottom-layer unit and supports upper-layer units such as an air conditioning function unit and a music function unit. The air conditioning function unit serves as a bottom-layer unit and supports upper-layer units such as a startup method unit and a temperature adjustment method unit. When the vehicle service unit is faulty, various methods provided by the air conditioning function unit that depends on the vehicle service unit may also become abnormal.

The structural relationship of the in-vehicle system may also be understood as an association relationship between a plurality of faulty units and a plurality of programs. One program may be used to implement one method, and may correspond to one method unit. That is, the programs may be in a one-to-one correspondence with the method units. An exception of the in-vehicle system may be caused by an exception or fault of one or more of the service unit, the function unit, and the method unit. When the exception occurs in the in-vehicle system, a plurality of units that may be faulty may be determined based on the structural relationship of the in-vehicle system. During manual analysis, one or more units that may be faulty may be further determined from the plurality of units with reference to one or more of exception state information, exception log information, and resource occupation information. When a unit is faulty, one or more programs affected by the function may be determined based on the structural relationship of the in-vehicle system. That is, an association relationship between the faulty unit and the one or more programs may be determined.

The exception library includes a first mapping relationship, that is, a correspondence between a plurality of pieces of exception identification information and a plurality of handling results. Each handling result includes an exception handling suggestion and/or an exception cause.

Exception identification information may be obtained by compression mapping exception program identifier, exception state information, and exception log information.

According to steps S201 and S202, a preparation phase of the vehicle-mounted device diagnosis method is completed.

Step S203: Collect exception data of the in-vehicle system.

Information about the in-vehicle system such as exception service stack information, exception service log information, and resource occupation information is obtained.

Two methods for collecting the exception data of the in-vehicle system may be provided. The exception data of the in-vehicle system is collected in two cases. One is that the in-vehicle system collects the information according to monitoring, and the other is that the in-vehicle system collects the information when receiving indication information. The collected information may include the exception stack information, the exception log information, and the like, and is used for subsequent exception locating. The exception locating is determining an exception cause or providing an exception handling suggestion. The exception cause is used to indicate a faulty unit in the in-vehicle system. The faulty unit causes the exception of the in-vehicle system. That is, the exception of the in-vehicle system is caused by a fault of the faulty unit. The exception handling suggestion is a solution for the exception of the in-vehicle system.

Step S204: Retrieve the knowledge base.

The knowledge base may be stored on a server. The vehicle-mounted device may send collected raw data or processed data to the server.

The exception stack information may include the exception state information and the exception program identifier. The exception log information corresponding to the exception stack information may be determined based on the exception stack information.

The exception identification information may be obtained based on the exception stack information and the exception log information. For example, the exception identification information may be obtained by compression mapping the exception stack information and the exception log information. The exception identification information may include all or a part of the exception stack information and the exception log information. For example, the exception log information used to determine the exception identification information may be last piece of log information in a log corresponding to the exception stack information.

The knowledge base is retrieved based on the exception identification information.

If a correspondence between the exception identification information and a handling result exists in the knowledge base, step S205 is performed.

Step S205: Feed back the handling result corresponding to the exception identification information to a user. For example, the handling result is sent to the vehicle-mounted device or user equipment.

Alternatively, if a correspondence between the exception identification information and a handling result does not exist in the knowledge base, step S206 is performed.

Step S206: Perform manual analysis. Manual locating is performed to determine the handling result corresponding to the exception identification information. During manual analysis, a root cause of the exception of the in-vehicle system can be analyzed and located based on the structural relationship of the in-vehicle system, the faulty unit can be determined, and a specific solution can be provided. One or more programs that are affected may be determined based on the faulty unit and the structural relationship of the in-vehicle system. The handling result corresponding to the exception identification information may include one or more of the following: an exception cause of the in-vehicle system, a solution, an affected program, and the like.

Step S207: Add a manually determined correspondence between the exception identification information and the handling result to the exception library of the knowledge base, and update the knowledge base.

The manually determined handling result is sent to the user. Step S205 may be performed after step S206, and the manually determined handling result is sent to the user equipment or the vehicle-mounted device. Alternatively, step S205 may be performed after step S207, and the server sends the handling result.

According to steps S201 to S207, when the exception occurs in the in-vehicle system, the handling result can be automatically provided to resolve a problem of the in-vehicle system. This solves a problem that maintenance personnel need to locally locate the problem, and the maintenance personnel do not need to repeatedly handle the same exception of the in-vehicle system. This saves time, and improves user experience.

According to the method for handling an exception of an in-vehicle system provided in this embodiment of this application, information about the in-vehicle system is collected through exception monitoring and user triggering, and the exception is handled on the server with reference to the knowledge base, to determine the handling result. The knowledge base is established based on the handling result provided by the maintenance personnel for the exception of the in-vehicle system. For the same problem, the handling result is generated by automatically retrieving the knowledge base.

The method for handling an exception of an in-vehicle system provided in this embodiment of this application may be applied to a plurality of operating systems, and usage is flexible. The handling result can be automatically provided, to reduce manual intervention. Through updating of the knowledge base, the exception does not need to be manually handled repeatedly, to reduce labor costs and improve handling efficiency.

A computer system usually includes four layers: a hardware system, system software, a support system, and an application. The hardware system refers to physical devices that constitute a computer, that is, physical components that include mechanical, optical, electrical, and magnetic components and that have functions of computing, control, storage, input, and output. The system software refers to a system that controls and coordinates the computer and external devices, and supports development and operation of the application. The support system may also be referred to as a decision support system, and is a computer application system that assists a decision maker in making semi-structured or unstructured decisions in a human-computer interaction manner through data, models, and knowledge. The application (application) corresponds to the system software, is a collection of various programming languages that can be used by the user and applications compiled in the various programming languages, and includes an application package and a user program. The application package is a collection of programs designed to resolve a type of problem by using a computer, and is used by a plurality of users.

The foregoing method may be implemented by executing programs on the in-vehicle client and the server. A program for implementing this embodiment of this application may run at an application layer or at another layer in the computer system.

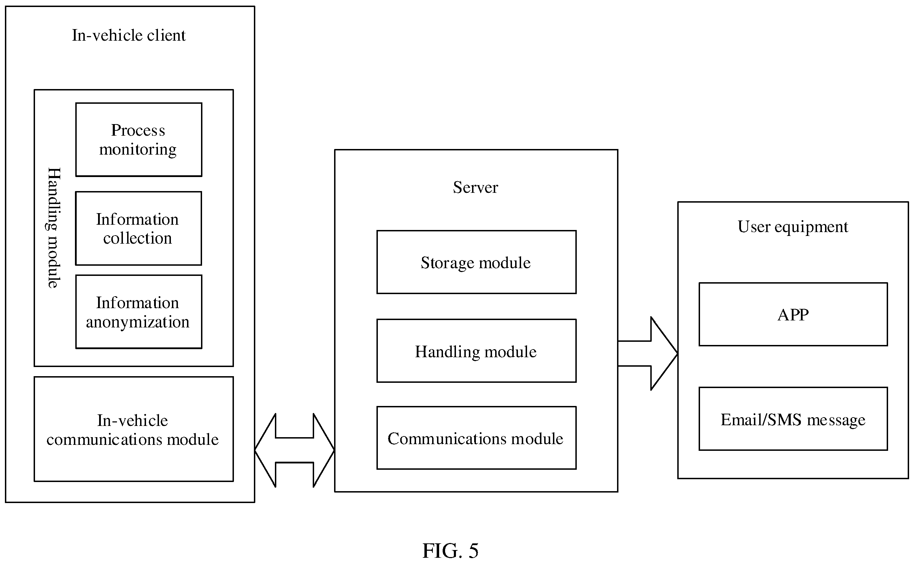

The foregoing describes the method embodiment of the embodiments of this application with reference to FIG. 2 to FIG. 4. The following describes an apparatus embodiment of the embodiments of this application with reference to FIG. 5 to FIG. 9. It should be understood that the description of the method embodiment corresponds to the description of the apparatus embodiment. Therefore, for a part that is not described in detail, refer to the foregoing method embodiment.

FIG. 5 is a schematic diagram of a system for handling an exception of an in-vehicle system according to an embodiment of this application. The system may be configured to perform the method shown in FIG. 2 or FIG. 3.

An in-vehicle client includes a handling module and an in-vehicle communications module. The in-vehicle client may include the in-vehicle system, or the in-vehicle client and the in-vehicle system may be two independent devices.

The handling module may be configured to perform process monitoring, information collection, and information anonymization.

The process monitoring means monitoring a state of the in-vehicle system to determine whether an exception occurs.

The information collection means collecting information about the in-vehicle system, for example, exception log information and exception stack information.

The information anonymization means performing anonymization on the collected information, to protect user privacy.

The in-vehicle communications module is configured to communicate with a server and transmit data.

The server includes a storage module, a handling module, and a communications module.

The storage module is configured to store a knowledge base. The knowledge base may include a first mapping relationship, and the first mapping relationship records a correspondence between a plurality of pieces of exception identification information and a plurality of handling results. The knowledge base may include a second mapping relationship, and the second mapping relationship is used to indicate an association relationship between a plurality of faulty units and a plurality of programs. A handling result includes an exception handling suggestion and/or an exception cause, and the exception cause is used to indicate a faulty unit.

The handling module is configured to handle information. The handling module may perform, based on received exception identification information sent by the in-vehicle client, handling in combination with the knowledge base, and determine the handling result. When the handling result includes the exception cause, the handling module may determine, based on the exception cause, a program affected by the faulty unit.

The communications module is mainly configured to notify a user of a solution, for example, notify the user of the solution through an app, an SMS message, and an email.

The communications module of the server is configured to communicate with the in-vehicle client and user equipment, and transmit data. The communications module of the server may receive the exception identification information sent by the in-vehicle client. The communications module of the server may send indication information to the in-vehicle client, where the indication information is used to indicate the in-vehicle client to obtain a program identifier of a first program. The communications module of the server may send the handling result and/or impact information to the user equipment, where the impact information is used to indicate the program affected by the faulty unit, and may be sent to the user equipment through an email, an SMS message, an application (application, APP) message, or the like.

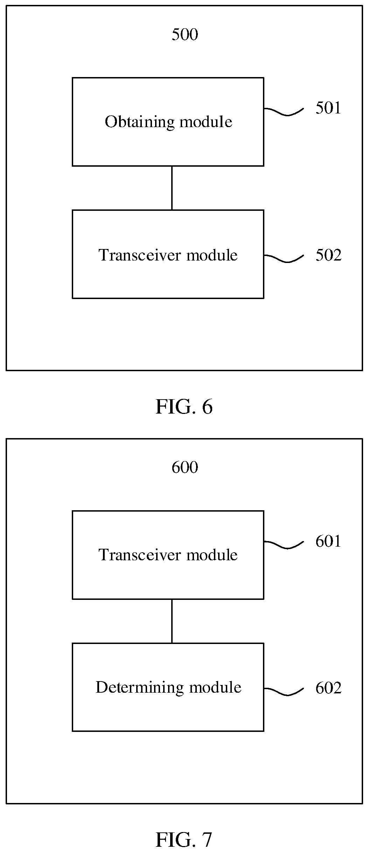

FIG. 6 is a schematic diagram of a structure of an apparatus for handling an exception of an in-vehicle system according to an embodiment of this application. An apparatus 500 includes an obtaining module 501 and a transceiver module 502.

The obtaining module 501 is configured to obtain a program identifier of a first program, where the first program is a program that runs abnormally.

The transceiver module 502 is configured to send a handling request to a server, where the handling request is used to indicate the server to determine, based on a first mapping relationship, a first handling result corresponding to first exception identification information. The handling request carries the first exception identification information, and the first exception identification information includes the program identifier of the first program. The first mapping relationship records a correspondence between a plurality of pieces of exception identification information and a plurality of handling results, and each piece of exception identification information includes one program identifier.

Optionally, code of the first program includes the program identifier of the first program.

Optionally, the obtaining module 501 is configured to obtain exception stack information, where the exception stack information includes the program identifier of the first program.

Optionally, when the first program runs, the program identifier of the first program is written into first memory space that is allocated to the first program, the code of the first program includes the program identifier of the first program, and the exception stack information is determined based on the first memory space.

Optionally, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

Optionally, the transceiver module 502 is further configured to receive a handling response sent by the server, where the handling response includes the first handling result.

Optionally, the first handling result includes a first exception cause, and the first exception cause is used to indicate a first faulty unit in the in-vehicle system.

The transceiver module 502 is further configured to receive the handling response sent by the server, where the handling response includes impact information. The impact information is used to indicate a second program. The second program is a program that is indicated by a second mapping relationship and that is associated with the first faulty unit, and the second mapping relationship is used to indicate an association relationship between a plurality of faulty units and a plurality of programs.

Optionally, the apparatus further includes a determining module configured to determine that an exception condition is met, so as to determine that an exception occurs in the in-vehicle system. The exception condition includes:

The in-vehicle client receives indication information, where the indication information is used to indicate the in-vehicle client to obtain the program identifier of the first program; and/or it is detected that the in-vehicle system is in at least one of the following exception states: the memory overflow of the in-vehicle system, the memory address error of the in-vehicle system, and the program exception of the in-vehicle system.

FIG. 7 is a schematic diagram of a structure of an apparatus for handling an exception of an in-vehicle system according to an embodiment of this application. An apparatus 600 includes a transceiver module 601 and a determining module 602.

The transceiver module 601 is configured to receive a handling request sent by an in-vehicle client, where the handling request carries first exception identification information, the first exception identification information includes a program identifier of a first program, and the first program is a program that runs abnormally.

The determining module 602 is configured to determine, based on a first mapping relationship, a first handling result corresponding to the first exception identification information, where the first mapping relationship records a correspondence between a plurality of pieces of exception identification information and a plurality of handling results, and each piece of exception identification information includes one program identifier.

Optionally, code of the first program includes the program identifier of the first program.

Optionally, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

Optionally, the transceiver module 601 is further configured to send a handling response to the in-vehicle client or user equipment corresponding to the in-vehicle client, where the handling response includes the first handling result.

Optionally, the first handling result includes a first exception cause, and the first exception cause is used to indicate a first faulty unit in the in-vehicle system.

The determining module 602 is further configured to determine, based on a second mapping relationship, a second program associated with the first faulty unit, where the second mapping relationship is used to indicate an association relationship between a plurality of faulty units and a plurality of programs.

Optionally, the transceiver module 601 is further configured to send a handling response to the in-vehicle client or the user equipment corresponding to the in-vehicle client, where the handling response includes impact information, and the impact information is used to indicate the second program.

Optionally, the transceiver module 601 is further configured to send indication information to the in-vehicle client, where the indication information is used to indicate the in-vehicle client to send the handling request to the server.

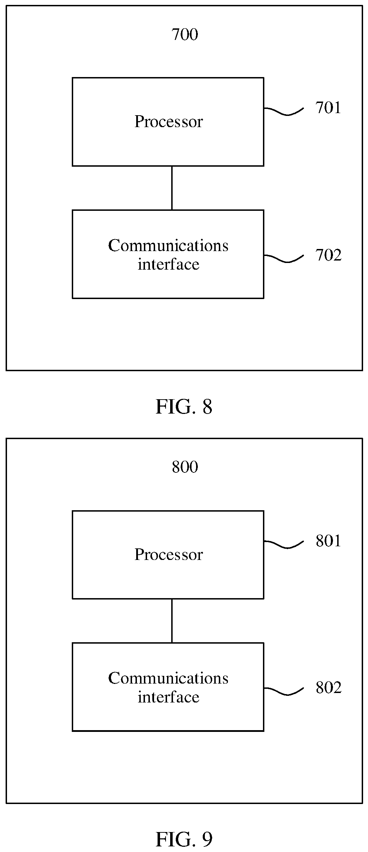

FIG. 8 is a schematic diagram of a structure of an apparatus for handling an exception of an in-vehicle system according to an embodiment of this application. An apparatus 700 includes a processor 701 and a communications interface 702.

The processor 701 is configured to obtain a program identifier of a first program, where the first program is a program that runs abnormally.

The communications interface 702 is configured to send a handling request to a server, where the handling request is used to indicate the server to determine, based on a first mapping relationship, a first handling result corresponding to first exception identification information. The handling request carries the first exception identification information, and the first exception identification information includes the program identifier of the first program. The first mapping relationship records a correspondence between a plurality of pieces of exception identification information and a plurality of handling results, and each piece of exception identification information includes one program identifier.

Optionally, code of the first program includes the program identifier of the first program.

Optionally, the processor 701 is configured to obtain exception stack information, where the exception stack information includes the program identifier of the first program.

Optionally, when the first program runs, the program identifier of the first program is written into first memory space that is allocated to the first program, the code of the first program includes the program identifier of the first program, and the exception stack information is determined based on the first memory space.

Optionally, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

Optionally, the communications interface 702 is further configured to receive a handling response sent by the server, where the handling response includes the first handling result.

Optionally, the first handling result includes a first exception cause, and the first exception cause is used to indicate a first faulty unit in the in-vehicle system.

The communications interface 702 is further configured to receive the handling response sent by the server, where the handling response includes impact information. The impact information is used to indicate a second program. The second program is a program that is indicated by a second mapping relationship and that is associated with the first faulty unit, and the second mapping relationship is used to indicate an association relationship between a plurality of faulty units and a plurality of programs.

Optionally, the processor 701 is further configured to determine that an exception condition is met, so as to determine that an exception occurs in the in-vehicle system. The exception condition includes:

The in-vehicle client receives indication information, where the indication information is used to indicate the in-vehicle client to obtain the program identifier of the first program; and/or it is detected that the in-vehicle system is in at least one of the following exception states: the memory overflow of the in-vehicle system, the memory address error of the in-vehicle system, and the program exception of the in-vehicle system.

FIG. 9 is a schematic diagram of a structure of an apparatus for handling an exception of an in-vehicle system according to an embodiment of this application. An apparatus 800 includes a processor 801 and a communications interface 802.

The communications interface 802 is configured to receive a handling request sent by an in-vehicle client, where the handling request carries first exception identification information, the first exception identification information includes a program identifier of a first program, and the first program is a program that runs abnormally.

The processor 801 is configured to determine, based on a first mapping relationship, a first handling result corresponding to first exception identification information, where the first mapping relationship records a correspondence between a plurality of pieces of exception identification information and a plurality of handling results, and each piece of exception identification information includes one program identifier.

Optionally, code of the first program includes the program identifier of the first program.

Optionally, each piece of exception identification information further includes at least one of the following parameters: exception log information, exception state information, and resource occupation information. The exception log information is obtained based on a log corresponding to the first program. The exception state information is used to indicate at least one of the following exception states: a memory overflow of the in-vehicle system, a memory address error of the in-vehicle system, and a program exception of the in-vehicle system. The resource occupation information is used to indicate a resource occupation status of the in-vehicle system.

Optionally, the communications interface 802 is further configured to send a handling response to the in-vehicle client or user equipment corresponding to the in-vehicle client, where the handling response includes the first handling result.

Optionally, the first handling result includes a first exception cause, and the first exception cause is used to indicate a first faulty unit in the in-vehicle system.

The processor 801 is further configured to determine, based on a second mapping relationship, a second program associated with the first faulty unit, where the second mapping relationship is used to indicate an association relationship between a plurality of faulty units and a plurality of programs.

Optionally, the communications interface 802 is further configured to send a handling response to the in-vehicle client or the user equipment corresponding to the in-vehicle client, where the handling response includes impact information, and the impact information is used to indicate the second program.

Optionally, the communications interface 802 is further configured to send indication information to the in-vehicle client, where the indication information is used to indicate the in-vehicle client to send the handling request to the server.

According to the embodiments of this application, a system for handling an exception of an in-vehicle system is further provided, and includes the in-vehicle client and the server described above.

According to the embodiments of this application, a computer program storage medium is further provided, where the computer program storage medium includes program instructions, and when the program instructions are directly or indirectly executed, the foregoing method is implemented.

According to the embodiments of this application, a chip system is further provided. The chip system includes at least one processor, and when program instructions are executed by the at least one processor, the foregoing method is performed.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments of this application, "at least one" means one or more, and "plurality" means two or at least two. The term "and/or" describes an association relationship for describing associated objects and represents that three relationships may exist. For example, A and/or B may represent the following three cases: Only A exists, both A and B exist, and only B exists. A and B may be in a singular form or a plural form. The character "/" generally indicates an "or" relationship between the associated objects. At least one of the following items and similar expressions refer to any combination of the items, including a single item or any combination of plural items. For example, at least one of a, b, and c may represent: a, b, c, a and b, a and c, b and c, or a, b, and c, where a, b, and c may be singular or plural. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for handling an exception of an in-vehicle system, wherein the method comprises:
obtaining, by an in-vehicle client, a program identifier of a first program, wherein the first program is a program that runs abnormally; and
sending, by the in-vehicle client, a handling request to a server, wherein the handling request carries first exception identification information, and is used to indicate the server to determine, based on a first mapping relationship, a first handling result corresponding to the first exception identification information, the first exception identification information comprises the program identifier of the first program, the first mapping relationship records a correspondence between a plurality of pieces of exception identification information and a plurality of handling results, and each piece of exception identification information comprises one program identifier.

2. The method according to claim 1, wherein code of the first program comprises the program identifier of the first program.

3. The method according to claim 1 or 2, wherein the obtaining, by an in-vehicle client, a program identifier of a first program comprises:
obtaining, by the in-vehicle client, exception stack information, wherein the exception stack information comprises the program identifier of the first program.

4. The method according to claim 3, wherein when the first program runs, the program identifier of the first program is written into first memory space that is allocated to the first program, the code of the first program comprises the program identifier of the first program, and the exception stack information is determined based on the first memory space.

5. The method according to any one of claims 1 to 4, wherein each piece of exception identification information further comprises at least one of the following parameters: exception log information, exception state information, and resource occupation information, wherein the exception log information is obtained based on a log corresponding to the first program, the exception state information is used to indicate at least one of the following exception states: a memory overflow of the in-vehicle system, a memory address error of the in-vehicle system, and a program exception of the in-vehicle system, and the resource occupation information is used to indicate a resource occupation status of the in-vehicle system.

6. The method according to any one of claims 1 to 5, wherein the method further comprises:
receiving, by the in-vehicle client, a handling response sent by the server, wherein the handling response comprises the first handling result.

7. The method according to any one of claims 1 to 6, wherein
the first handling result comprises a first exception cause, the first exception cause is used to indicate a first faulty unit in the in-vehicle system, and
the method further comprises: receiving, by the in-vehicle client, the handling response sent by the server, wherein the handling response comprises impact information, the impact information is used to indicate a second program, the second program is a program that is indicated by a second mapping relationship and that is associated with the first faulty unit, and the second mapping relationship is used to indicate an association relationship between a plurality of faulty units and a plurality of programs.

8. The method according to any one of claims 1 to 7, wherein the method further comprises:
determining, by the in-vehicle client, that an exception condition is met, to determine that the exception occurs in the in-vehicle system, wherein the exception condition comprises:
receiving, by the in-vehicle client, indication information, wherein the indication information is used to indicate the in-vehicle client to obtain the program identifier of the first program; and/or
detecting that the in-vehicle system is in at least one of the following exception states: the memory overflow of the in-vehicle system, the memory address error of the in-vehicle system, and the program exception of the in-vehicle system.

9. A method for handling an exception of an in-vehicle system, wherein the method comprises:
receiving, by a server, a handling request sent by an in-vehicle client, wherein the handling request carries first exception identification information, the first exception identification information comprises a program identifier of a first program, and the first program is a program that runs abnormally; and
determining, by the server based on a first mapping relationship, a first handling result corresponding to the first exception identification information, wherein the first mapping relationship records a correspondence between a plurality of pieces of exception identification information and a plurality of handling results, and each piece of exception identification information comprises one program identifier.

10. The method according to claim 9, wherein code of the first program comprises the program identifier of the first program.

11. The method according to claim 9 or 10, wherein each piece of exception identification information further comprises at least one of the following parameters: exception log information, exception state information, and resource occupation information, wherein the exception log information is obtained based on a log corresponding to the first program, the exception state information is used to indicate at least one of the following exception states: a memory overflow of the in-vehicle system, a memory address error of the in-vehicle system, and a program exception of the in-vehicle system, and the resource occupation information is used to indicate a resource occupation status of the in-vehicle system.

12. The method according to any one of claims 9 to 11, wherein the method further comprises:
sending, by the server, a handling response to the in-vehicle client or user equipment corresponding to the in-vehicle client, wherein the handling response comprises the first handling result.

13. The method according to any one of claims 9 to 12, wherein the first handling result comprises a first exception cause, the first exception cause is used to indicate a first faulty unit in the in-vehicle system, and
the method further comprises:
determining, by the server based on a second mapping relationship, a second program associated with the first faulty unit, wherein the second mapping relationship is used to indicate an association relationship between a plurality of faulty units and a plurality of programs.

14. The method according to claim 13, wherein the method further comprises:
sending, by the server, a handling response to the in-vehicle client or the user equipment corresponding to the in-vehicle client, wherein the handling response comprises impact information, and the impact information is used to indicate the second program.

15. The method according to any one of claims 9 to 14, wherein the method further comprises:
sending, by the server, indication information to the in-vehicle client, wherein the indication information is used to indicate the in-vehicle client to send the handling request to the server.

16. An apparatus for handling an exception of an in-vehicle system, comprising:
an obtaining module, configured to obtain a program identifier of a first program, wherein the first program is a program that runs abnormally; and
a transceiver module, configured to send a handling request to a server, wherein the handling request carries first exception identification information, and is used to indicate the server to determine, based on a first mapping relationship, a first handling result corresponding to the first exception identification information, the first exception identification information comprises the program identifier of the first program, the first mapping relationship records a correspondence between a plurality of pieces of exception identification information and a plurality of handling results, and each piece of exception identification information comprises one program identifier.

17. The apparatus according to claim 16, wherein code of the first program comprises the program identifier of the first program.

18. The apparatus according to claim 16 or 17, wherein
the obtaining module is configured to obtain exception stack information, wherein the exception stack information comprises the program identifier of the first program.

19. The apparatus according to claim 18, wherein when the first program runs, the program identifier of the first program is written into first memory space that is allocated to the first program, the code of the first program comprises the program identifier of the first program, and the exception stack information is determined based on the first memory space.

20. The apparatus according to any one of claims 16 to 19, wherein each piece of exception identification information further comprises at least one of the following parameters: exception log information, exception state information, and resource occupation information, wherein the exception log information is obtained based on a log corresponding to the first program, the exception state information is used to indicate at least one of the following exception states: a memory overflow of the in-vehicle system, a memory address error of the in-vehicle system, and a program exception of the in-vehicle system, and the resource occupation information is used to indicate a resource occupation status of the in-vehicle system.

21. The apparatus according to any one of claims 16 to 20, wherein
the transceiver module is further configured to receive a handling response sent by the server, wherein the handling response comprises the first handling result.

22. The apparatus according to any one of claims 16 to 21, wherein
the first handling result comprises a first exception cause, the first exception cause is used to indicate a first faulty unit in the in-vehicle system, and
the transceiver module is further configured to receive the handling response sent by the server, wherein the handling response comprises impact information, the impact information is used to indicate a second program, the second program is a program that is indicated by a second mapping relationship and that is associated with the first faulty unit, and the second mapping relationship is used to indicate an association relationship between a plurality of faulty units and a plurality of programs.

23. The apparatus according to any one of claims 16 to 22, wherein
the apparatus further comprises a determining module configured to determine that an exception condition is met, so as to determine that the exception occurs in the in-vehicle system, and the exception condition comprises:
receiving, by the in-vehicle client, indication information, wherein the indication information is used to indicate the in-vehicle client to obtain the program identifier of the first program; and/or
detecting that the in-vehicle system is in at least one of the following exception states: the memory overflow of the in-vehicle system, or the memory address error of the in-vehicle system.

24. An apparatus for handling an exception of an in-vehicle system, comprising:
a transceiver module, configured to receive a handling request sent by an in-vehicle client, wherein the handling request carries first exception identification information, the first exception identification information comprises a program identifier of a first program, and the first program is a program that runs abnormally; and
a determining module, configured to determine, based on a first mapping relationship, a first handling result corresponding to the first exception identification information, wherein the first mapping relationship records a correspondence between a plurality of pieces of exception identification information and a plurality of handling results, and each piece of exception identification information comprises one program identifier.

25. The apparatus according to claim 24, wherein code of the first program comprises the program identifier of the first program.

26. The apparatus according to claim 24 or 25, wherein each piece of exception identification information further comprises at least one of the following parameters: exception log information, exception state information, and resource occupation information, wherein the exception log information is obtained based on a log corresponding to the first program, the exception state information is used to indicate at least one of the following exception states: a memory overflow of the in-vehicle system, a memory address error of the in-vehicle system, and a program exception of the in-vehicle system, and the resource occupation information is used to indicate a resource occupation status of the in-vehicle system.

27. The apparatus according to any one of claims 24 to 26, wherein
the transceiver module is further configured to send a handling response to the in-vehicle client or user equipment corresponding to the in-vehicle client, wherein the handling response comprises the first handling result.

28. The apparatus according to any one of claims 24 to 27, wherein the first handling result comprises a first exception cause, the first exception cause is used to indicate a first faulty unit in the in-vehicle system, and
the determining module is further configured to determine, based on a second mapping relationship, a second program associated with the first faulty unit, wherein the second mapping relationship is used to indicate an association relationship between a plurality of faulty units and a plurality of programs.

29. The apparatus according to claim 28, wherein
the transceiver module is further configured to send a handling response to the in-vehicle client or the user equipment corresponding to the in-vehicle client, wherein the handling response comprises impact information, and the impact information is used to indicate the second program.

30. The apparatus according to any one of claims 24 to 29, wherein
the transceiver module is further configured to send indication information to the in-vehicle client, wherein the indication information is used to indicate the in-vehicle client to send the handling request to the server.

31. A computer storage medium, wherein when computer instructions are run on an electronic device, the electronic device is enabled to perform the method according to any one of claims 1 to 15.

32. A chip system, comprising at least one processor, wherein when program instructions are executed in the at least one processor, the method according to any one of claims 1 to 15 is performed.
